(19) Europäisches Patentamt
European Patent Office
Office européen des brevets

(11) **EP 0 857 080 B1**

(12) **EUROPÄISCHE PATENTSCHRIFT**

(45) Veröffentlichungstag und Bekanntmachung des Hinweises auf die Patenterteilung:
**24.05.2000 Patentblatt 2000/21**

(51) Int Cl.⁷: $B01F\ 5/02$, B01F 5/06, B01J 19/24

(21) Anmeldenummer: **96926361.5**

(22) Anmeldetag: **18.07.1996**

(86) Internationale Anmeldenummer:
**PCT/EP96/03162**

(87) Internationale Veröffentlichungsnummer:
**WO 97/16239 (09.05.1997 Gazette 1997/20)**

(54) **STATISCHER MIKROVERMISCHER**

STATIC MICROMIXER

MICROMELANGEUR STATIQUE

(84) Benannte Vertragsstaaten:
**AT BE CH DE DK ES FI FR GB GR IE IT LI NL PT SE**

(30) Priorität: **28.10.1995 DE 19540292**

(43) Veröffentlichungstag der Anmeldung:
**12.08.1998 Patentblatt 1998/33**

(73) Patentinhaber:
• **Forschungszentrum Karlsruhe GmbH**
 **76133 Karlsruhe (DE)**
• **BAYER AG**
 **51368 Leverkusen (DE)**

(72) Erfinder:
• **SCHUBERT, Klaus**
 **D-76227 Karlsruhe (DE)**
• **BIER, Wilhelm**
 **D-76344 Eggenstein-Leopoldshafen (DE)**

• **HERRMANN, Erhard**
 **D-51375 Leverkusen (DE)**
• **MENZEL, Thomas**
 **D-40723 Hilden (DE)**
• **LINDER, Gerd**
 **D-76149 Karlsruhe (DE)**

(74) Vertreter: **Rückert, Friedrich, Dr.**
 **Forschungszentrum Karlsruhe GmbH**
 **Patente und Lizenzen**
 **Weberstrasse 5**
 **76133 Karlsruhe (DE)**

(56) Entgegenhaltungen:
**WO-A-91/16970       WO-A-94/21372**
**WO-A-95/30476        GB-A- 2 073 604**

• **PATENT ABSTRACTS OF JAPAN vol. 6, no. 149 (C-118), 10.August 1982 & JP,A,57 071627 (TEIJIN LTD), 4.Mai 1982,**

**Beschreibung**

Die Erfindung betrifft einen statischen Mikrovermischer mit einer Mischkammer und einem vorgeschalteten Führungsbauteil für die getrennte Zufuhr von zu mischenden oder zu dispergierenden Fluiden zu der Mischkammer gemäß dem Oberbegriff von Patentanspruch 1.

Aus der WO91/16970 A1 ist eine Mischeranordnung in einer Kolonne mit Misch-, Katalysator- bzw. Kanalelementen bekannt, die in Schichten oder Lagen angeordnet sein können. Benachbarte Elemente innerhalb einer Lage oder Schicht sind gegeneinander zur Hauptströmungsrichtung geneigt angeordnet. Hierzu können die Elemente die Form eines schiefen Prismas haben, das von im Querschnitt quadratischen, gerade und parallel zueinander verlaufenden Kanälen durchzogen ist und das durch Zusammenfügen strukturierter Platten gefertigt werden kann. Bei einer so getroffenen Anordnung wird ein gleichmäßiger Strömungswiderstand bezüglich der zu mischenden Fluide erzielt, die Mischungseffektivität fällt jedoch vom Zentrum zu den Randzonen hin des als Mischkammer dienenden Kolonnenraumes am abströmseitigen Ende der Elemente stark ab.

Aus der DE 31 14 195 C2 ist eine gattungsgemäße Mischvorrichtung zur Vermischung strömender Medien mit mindestens zwei Einlaßkanälen, mit einem sich an diese anschließenden Kanalkörper sowie mit einem an die gemeinsame Auslaßseite des Kanalkörpers angeschlossenen Auslaßkanal bekannt. Der von Einzelkanälen durchzogene Kanalkörper, der zur getrennten Zufuhr der zu mischenden Medien zum Auslaßkanal dient, ist aus aufeinander aufgeschichteten Einzelwell-Einheiten aufgebaut, die aus je einer Trennwand und einem Wellbogen bestehen. Die Einzelkanäle jeder Einheit werden von den Wellungen des Wellbogens und der zugehörigen Trennwand gebildet. Die Einheiten sind so aufeinander geschichtet, daß die Einzelkanäle benachbarter Einheiten vorbestimmte Winkel zueinander bilden. In einem Ausführungsbeispiel ist die Anordnung so getroffen, daß der Kanalkörper gleich lange, parallele Einzelkanäle hat, wobei die Einzelkanäle der jeweiligen Einheiten abwechselnd an je einen von zwei Einlaßkanälen angeschlossen sind, auf der Auslaßseite des Kanalkörpers mit ihren Mündungen jedoch übereinander liegen. Da das jeweilige Medium nur in jeden zweiten Einzelkanal, in der Höhenerstreckung des Kanalköpers gesehen, einströmen darf, muß der Einlaß zu der jeweils dazwischenliegenden Einheit geschlossen sein (s. Spalte 6, Zeilen 26 bis 33 in Verbindung mit Fig. 7a, 7b), wodurch Totvolumina entstehen. Aber auch bei dieser Bauart ergibt sich nur im Zentrum der Auslaßseite des Kanalkörpers eine optimale Durchmischung; zu den Randzonen hin nimmt die Mischungseffektivität ab. Auch ist das Ausformen oder Anbringen der erforderlichen Einlaß-Verschlüsse aufwendig und stößt mit kleiner werdenden Kanalquerschnitten auf fertigungstechnische Schwierigkeiten.

Die EP-B 0 046 035 beschreibt einen statischen Mikromischer in Form einer Verbundfaden-Anordnung, der aus Fäden aufgebaut ist, die aus unterschiedlichen Polymeren bestehen. Der Mischer weist alternierende "Platten" mit einer Dicke im Bereich von 0,05 bis 2 mm auf. Benachbart zueinander verlaufende Kanäle oder Scharen benachbarter Nuten sind nicht vorhanden.

Ausgehend von dem vorstehend erörteten Stand der Technik hat die Erfindung zur Aufgabe, bei einem statischen Vermischer der gattungsgemäßen Bauart das Führungsbauteil für die getrennte Zufuhr der zu mischenden Fluide zur Mischkammer so zu gestalten, daß eine erhöhte örtliche und zeitliche Effektivität der Vermischung in der Mischkammer erzielt wird. Darüber hinaus soll der Vermischer hinsichtlich der Kanäle in dem Führungsbauteil eine vakuumdichte und druckfeste Ausführung ermöglichen, so daß er insbesondere in der chemischen Technik eingesetzt werden kann.

Diese Aufgabe wird mit den kennzeichnenden Merkmalen von Patentanspruch 1 gelöst. Die hierauf bezogenen Unteransprüche beinhalten vorteilhafte Weiterbildungen dieser Lösung.

Durch die bogenförmig gestalteten, parallel zueinander und zur Hauptströmungsrichtung in die Mischkammer ausmündenden Kanäle der Elemente A und B des Führungsbauteils wird über dem gesamten Ausströmquerschnitt eine gleichmäßig hohe Vermischung bei Vermeidung von Totvolumina im Führungsbauteil erzielt. Aufgrund der Mikrostrukturierung der Kanalreihen werden die zu vermischenden oder zu dispergierenden Fluide in eine Vielzahl feinster benachbarter Stromfäden oder Lamellen unterteilt, die beim Eintritt in die Mischkammer sich auf schnellstem und kürzestem Wege durchmischen können oder in eine Tropfen oder Blasen bildende Dispersphase und eine die kontinuierliche Phase bildende Hüllphase zerteilt werden. Die Dichte der Kanalmündungen und damit der Stromfäden am Eintritt in die Mischkammer beträgt einige tausend Mündungen bzw. Stromfäden pro cm$^2$.

Die in Merkmal a) des zweiten Patentanspruchs genannten Folien lassen sich auf folgende Weise herstellen:

a) eine Rohfolie (13) wird mittels Unterdruck auf eine drehbare, geschliffene Metallsinterplatte (12) gespannt;

b) in die sich drehende Rohfolie (13) werden mittels einem Formdiamanten in einem mittleren Bereich der Rohfolie (13) zwischen deren Drehmittelpunkt (M) und deren Peripherie eine Schar konzentrischer Nuten (14) eingearbeitet;

c) die Rohfolie (13) wird in vier Einzelfolien (1A, 1B) unterteilt in der Weise, daß

durch zwei aufeinander senkrecht stehende, sich im Drehmittelpunkt (M) kreuzende Schnitte vier Segmente entstehen, und daß durch weitere Schnitte an jedem Segment vier deckungsgleiche Fünfecke gemäß Anspruch 2 gebildet werden.

Ein Ausführungsbeispiel des erfindungsgemäßen Mikrovermischers sowie ein Verfahren zur Herstellung desselben werden im folgenden anhand der Zeichnungen erläutert.

Die Figur 1 zeigt perspektivisch und in starker Vergrößerung zwei übereinander zu schichtende, genutete Folien und eine Deckplatte;

die Figur 2 zeigt den Mikrovermischer schematisch in der Draufsicht;

die Figur 3 veranschaulicht das Herstellungsverfahren für die genuteten Folien.

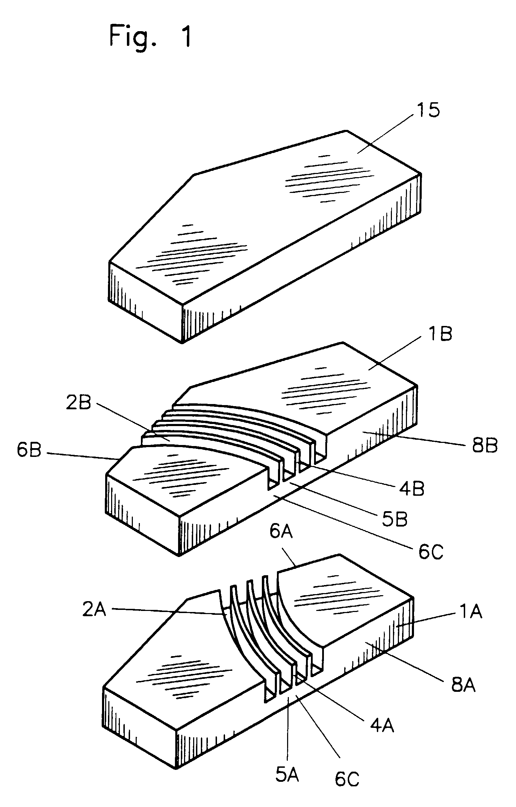

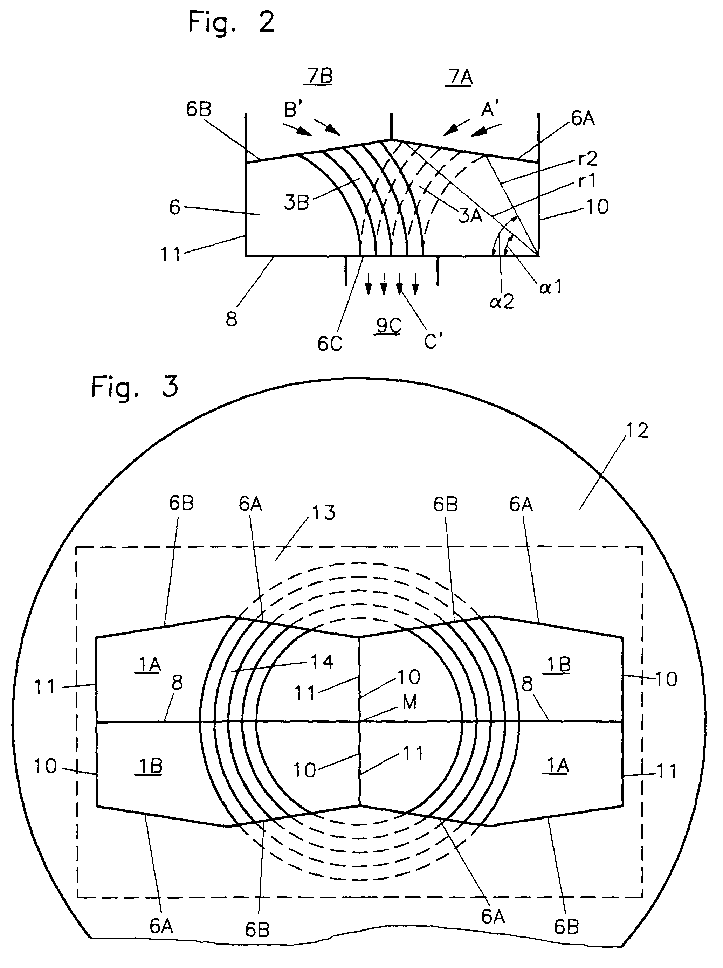

Gemäß Fig. 1 bestehen die plattenförmigen, übereinanderzuschichtenden Elemente abwechselnd jeweils aus dünnen Folien 1A und 1B mit einer Dicke von 30 bis 1000 µm, vorzugsweise < 250 µm bei einer lateralen Ausdehnung im Millimeterbereich. In die Folien 1A, 1B ist je eine Schar eng benachbarter, bogenförmig gekrümmter Nuten 2A, 2B eingearbeitet, so daß beim Übereinanderschichten der Folien 1A, 1B abwechselnd je eine Reihe von Kanälen 3A und 3B entsteht (siehe Fig. 2).

Die Nuten haben Tiefen von < 1000 µm, vorzugsweise < 250 µm, Breiten von 10 µm bis in den Millimeterbereich, vorzugsweise jedoch < 500 µm, bei Wanddicken der Zwischenstege 4A, 4B und Nutböden 5A, 5B von < 1000 µm, vorzugsweise < 250 µm. Die Nutenschar 2B verläuft von der linken, hinteren Stirnfläche 6B bogenförmig zum mittleren Bereich 6C der vorderen Stirnfläche 8B der Folie 1B, die Nutenschar 2A verläuft bogenförmig von der rechten, hinteren Stirnfläche 6A zum mittleren Bereich 6C der vorderen Stirnfläche 8A der Folie 1A, wobei beide Folienarten 1A und 1B den gleichen Grundriß haben. Dieser Grundriß hat die geometrische Form eines Fünfecks, gebildet aus einem Rechteck mit hieran angeschlossenem, gleichschenkeligem Dreieck, wobei eine Seite des Rechtecks die Grundseite des gleichschenkeligen Dreiecks bildet.

Schichtet man eine Vielzahl dieser Folien 1A und 1B abwechselnd und deckungsgleich übereinander, so entsteht ein Führungsbauteil 6, wie es in der Draufsicht schematisch aus Fig. 2 hervorgeht. An die beiden von den Schenkeln des Dreiecks gebildeten Flächen 6A, 6B sind die Zufuhrkammern 7A, 7B für die Fluide A', B' angeschlossen. An den mittleren Bereich 6C der gegenüberliegenden Fläche 8, in den die Kanäle 3A, 3B parallel zueinander ausgerichtet ausmünden, ist die Mischkammer 9C angeschlossen, über die die miteinander zu vermischenden oder zu dispergierenden Fluide A', B' bzw. deren Reaktionsprodukte C' abgeführt werden.

Die Schenkelflächen 6A, 6B sind gegenüber der Fläche 8 bzw. den beiden Seitenflächen 10, 11 des Führungsbauteils 6 so geneigt, daß die vom mittleren Bereich 6C der Fläche 8, an den die Mischkammer 9C angeschlossen ist, ausgehenden, von Folie 1A zu Folie 1B abwechselnd zu der Zufuhrkammer 7A und der Zufuhrkammer 7B führenden Scharen von bogenförmigen Kanälen 3A bzw. 3B annähernd gleiche Längen aufweisen.

Bei kreisbogenförmigen Nuten bzw. Kanälen bedeutet dies, daß die Bogenlänge

$$L = \frac{2\pi r \cdot \alpha}{360°} \overset{!}{=} const.$$

sein soll, wobei r den jeweiligen Krümmungsradius und a den zugehörigen Bogenwinkel der betreffenden Nuten bzw. Kanäle bedeutet. Dies würde an sich zu gekrümmten Schenkelflächen 6A, 6B führen. In der Praxis ist es jedoch im allgemeinen ausreichend, diese gekrümmten Flächen durch eine Näherungsgerade "einzuebnen", z. B. nach der Vorschrift

$$\frac{\alpha_2}{\alpha_1} = \frac{r_1}{r_2}$$

wobei $r_1$ den größten und $r_2$ den kleinsten Radius und $\alpha_1$ bzw. $\alpha_2$ die zugehörigen Bogenwinkel zur äußersten und innersten Nut bedeuten.

Nach dem Übereinanderschichten werden die Folien 1A, 1B mit Deckplatten 15 versehen und vakuumdicht und druckfest miteinander verbunden, z. B. diffusionsverschweißt, so daß das so entstandene Führungsbauteil 6 die Gestalt eines homogenen Mikrostrukturkörpers erhält, der an die Kammern 7A, 7B und 9C angeschlossen wird.

Zur Herstellung der Folien 1A, 1B kann eine drehbare Sintermetallplatte 12 mit geschliffener Oberfläche eingesetzt werden, auf der eine Rohfolie 13 aus einem Metall wie z. B. Kupfer oder Silber mittels Unterdruck aufgespannt wird (siehe Fig. 3). In die sich drehende Rohfolie 13 werden mittels einem Formdiamanten (nicht dargestellt) in einem mittleren Bereich zwischen Drehmittelpunkt M und Peripherie der Rohfolie 13 eine Schar konzentrischer Nuten 14 eingearbeitet. Sodann wird die Rohfolie 13 in vier Einzelfolien IA, 1B unterteilt in der Weise, daß vier mit dem mittleren Durchmesser der konzentrischen Nutenschar übereinstimmende Längsseiten 8, von deren mittlerem Bereich die kreisbogenförmige Nutenschar 14 ihren Ausgang nimmt, je zwei, also insgesamt acht Schmalseiten 10, 11 sowie je zwei Schenkelpaare 6A, 6B entstehen, wobei die Nutenschar 14 jeweils in einen der beiden Schenkel 6A bzw. 6B ausmündet. Es entstehen also aus vier Segmenten die vorerwähnten vier deckungsgleichen Fünfecke. Die Nuten haben vorzugsweise rechteckige Querschnitte. Es können auch mehrere genutete Rohfolien übereinander geschichtet und gemeinsam in die Fünfecke zerschnitten werden.

Bezugszeichenliste

1A Folie
1B Folie
2A Nuten
2B Nuten
3A Kanäle
3B Kanäle
4A Zwischenstege
4B Zwischenstege
5A Nutböden
5B Nutböden
6 Führungsbauteil
6A hintere Stirnfläche
6B hintere Stirnfläche
6C mittlerer Bereich
7A Zufuhrkammer
7B Zufuhrkammer
8 vordere Stirnfläche
9C Mischkammer
10 Seitenflächen
11 Seitenflächen
12 Sintermetallplatte
13 Rohfolie
14 Nuten
15 Deckplatte
A' Fluide
B' Fluide
C' Reaktionsprodukt
$r_1$ Krümmungsradius
$r_2$ Krümmungsradius
$\alpha_1$ Bogenwinkel
$\alpha_2$ Bogenwinkel
M Drehmittelpunkt

**Patentansprüche**

1. Statischer Mikrovermischer mit einer Mischkammer (9C) und einem vorgeschalteten Führungsbauteil (6) für die getrennte Zufuhr von zu mischenden oder zu dispergierenden Fluiden zu der Mischkammer (9C), wobei
   das Führungsbauteil (6) aus mehreren, plattenartigen, übereinandergeschichteten Elementen zusammengesetzt ist, die von je einer Reihe langgestreckter, benachbart zueinander verlaufender Kanäle (3A, 3B) durchzogen sind;
   dabei sind wenigstens zwei Arten von Elementen A und B vorgesehen, die abwechselnd übereinandergeschichtet sind und deren Reihen von Kanälen (3A, 3B) mit ihren an die Mischkammer(9C) angrenzenden Mündungen übereinander liegen und dort einen gemeinsamen Querschnitt bilden, wobei abwechselnd die Reihen von Kanälen (3A, 3B) der Elementart A zu einer Zufuhrkammer eines Fluids A' und die Reihen von Kanälen der Elementart B zu einer Zufuhrkammer eines Fluids B' führen, gekennzeichnet durch folgende Merkmale:

   a) die plattenartigen Elemente A und B für das Führungsbauteil bestehen jeweils aus dünnen Folien (1A, 1B) mit einer Dicke von 30 bis 1000 µm, vorzugsweise < 250 µm, bei einer lateralen Ausdehnung im Millimeterbereich, in die je eine Schar benachbarter Nuten (2A, 2B) eingearbeitet sind, so daß beim Übereinanderschichten der Folien (1A, 1B) je eine Reihe von Kanälen (3A, 3B) für die Führung der zu mischenden Fluide A' und B' entsteht;
   b) die Nuten (2A, 2B) haben Tiefen von < 1000 µm, vorzugsweise < 250 µm, Breiten von 10 µm bis in den Millimeterbereich, vorzugsweise jedoch < 500 µm, bei Wanddicken der Zwischenstege (4A, 4B) und Nutböden (5A, 5B) von < 1000 µm, vorzugsweise < 250 µm;
   c) die jeweiligen Scharen von Nuten (2A, 2B) in den übereinandergeschichteten Folien (1A, 1B) verlaufen jeweils bogenförmig gekrümmt und abwechselnd von der Mischkammer (9C) zu je einer Zufuhrkammer (7A, 7B) für das Fluid A' bzw. B' in der Weise, daß alle Scharen von Nuten (2A, 2B) der Folien (1A, 1B) parallel zueinander ausgerichtet in die Mischkammer (9C) ausmünden.

2. Statischer Mikrovermischer nach Anspruch 1, gekennzeichnet durch folgende Merkmale:

   a) die übereinandergeschichteten Folien (1A, 1B) haben in der Draufsicht die geometrische Form eines Fünfecks, das durch ein Rechteck mit hieran angeschlossenem gleichschenkeligem Dreieck gebildet wird, wobei eine Seite des Rechtecks die Grundseite des gleichschenkeligen Dreiecks bildet;
   b) an die beiden von den Schenkeln des Dreiecks gebildeten Flächen (6A, 6B) sind die Zufuhrkammern (7A, 7B) für die Fluide A' bzw. B' und an die von der gegenüberliegenden Längsseite des Rechtecks gebildete Fläche (8) die Mischkammer (9C) angeschlossen,
   c) die Schenkel (6A, 6B) des Dreiecks sind gegenüber seiner Grundseite so geneigt, daß die von der Mischkammer (9C) ausgehenden, von Folie (1A) zu Folie (1B) abwechselnd zu der Zufuhrkammer (7A) bzw. der Zufuhrkammer (7B) führenden bogenförmigen Nuten (2A, 2B) jeweils annähernd gleiche Längen aufweisen.

**3.** Statischer Mikrovermischer nach Anspruch 1, dadurch gekennzeichnet, daß die übereinandergeschichteten Folien (1A, 1B) zu einem vakuumdichten und druckfesten Mikrostrukturkörper (6) miteinander verbunden, z. B. diffusionsverschweißt, sind, der an die Zufuhrkammer (7A bzw. 7B) und die Mischkammer (9C) angeschlossen ist.

**4.** Verfahren zur Herstellung der Folien nach Anspruch 2, gekennzeichnet durch folgende Schritte:

a) eine Rohfolie (13) wird mittels Unterdruck auf eine drehbare, geschliffene Metallsinterplatte (12) gespannt;

b) in die sich drehende Rohfolie (13) werden mittels einem Formdiamanten in einem mittleren Bereich der Rohfolie (13) zwischen deren Drehmittelpunkt (M) und deren Peripherie eine Schar konzentrischer Nuten (14) eingearbeitet;

c) die Rohfolie (13) wird in vier Einzelfolien (1A, 1B) unterteilt in der Weise, daß durch zwei aufeinander senkrecht stehende, sich im Drehmittelpunkt (M) kreuzende Schnitte vier Segmente entstehen, und daß durch weitere Schnitte an jedem Segment vier deckungsgleiche Fünfecke gemäß Anspruch 2 gebildet werden.

## Claims

**1.** Static micromixer, having a mixing chamber (9C) and an upstream guide component (6) for separately feeding fluids, which are to be mixed or dispersed, to the mixing chamber (9C), the guide component (6) comprising a plurality of plate-like, stacked elements, which are each traversed by a row of elongate channels (3A, 3B), which extend adjacently relative to one another;

in such case, at least two types of elements A and B are provided, which are stacked alternately and have rows of channels (3A, 3B) lying one on top of the other with their apertures abutting against the mixing chamber (9C), and said rows form a common cross-section there, the rows of channels (3A, 3B) of element type A leading to a feed chamber for a fluid A' and alternating with the rows of channels of element type B leading to a feed chamber for a fluid B',

characterised by the following features:

a) the plate-like elements A and B for the guide component each comprise thin films (1A, 1B) having a thickness of 30 to 1000 μm, preferably < 250 μm, with a lateral dimension in the millimetre range, each group of adjacent grooves (2A, 2B) being incorporated in said films so that, when the films (1A, 1 B) are stacked one on top of the other, each row of channels (3A, 3B) is produced for guiding the fluids A' and B' which are to be mixed;

b) the grooves (2A, 2B) have depths of < 1000 μm, preferably < 250 μm, widths of from10 μm into the milimetre range, but preferably < 500 μm, with wall thicknesses for the intermediate webs (4A, 4B) and groove bases (5A, 5B) of < 1000 μm, preferably < 250 μm; and

c) the respective groups of grooves (2A, 2B) in the stacked films (1A, 1 B) each extend in an arcuate curve and alternately from the mixing chamber (9C) to a respective feed chamber (7A, 7B) for the fluid A' or B' in such a manner that all of the groups of grooves (2A, 2B) of the films (1A, 1B) terminate in the mixing chamber (9C) when orientated parallel to one another.

**2.** Static micromixer according to claim 1, characterised by the following features:

a) when viewed from above, the stacked films (1A, 1B) have the geometrical configuration of a pentagon, which is formed by a rectangle with an isosceles triangle attached thereto, one side of the rectangle forming the base of the isosceles triangle;

b) the feed chambers (7A, 7B) for the fluids A' and B' respectively communicate with the two faces (6A, 6B), which are formed by the legs of the triangle, and the mixing chamber (9C) communicates with the face (8), which is formed by the oppositely situated longitudinal side of the rectangle; and

c) the legs (6A, 6B) of the triangle are inclined relative to its base so that the arcuate grooves (2A, 2B), which extend from the mixing chamber (9C) and lead to the feed chamber (7A) or respectively to the feed chamber (7B) alternately from film (1A) to film (1B), each have approximately identical lengths.

**3.** Static micromixer according to claim 1, characterised in that the stacked films (1A, 1B) are interconnected, e.g. diffusion-welded, to form a vacuum-tight and pressure-resistant microstructural body (6), which communicates with the feed chamber (7A or respectively 7B) and the mixing chamber (9C).

**4.** Method of producing the films according to claim 2, characterised by the following steps:

a) a blank film (13) is stretched over a rotatable, ground, metal sintering plate (12) by means of reduced pressure;

b) a group of concentric grooves (14) is incorporated in the rotating blank film (13) by means of a diamond wheel dresser in a central region of the blank film (13) between its centre of rotation (M) and its periphery; and

c) the blank film (13) is divided into four individual films (1A, 1B) in such a manner that four segments are produced by means of two cuts, which lie at right angles to each other and intersect at the centre of rotation (M), and in such a manner that four pentagons of identical area according to claim 2 are formed by additional cuts on each segment.

**Revendications**

1. Micromélangeur statique comprenant une chambre de mélange (9C) et une pièce de guidage (6) en amont pour assurer l'alimentation séparée des fluides à mélanger ou à disperser dans la chambre de mélange (9C),

   - la pièce de guidage (6) étant composée de plusieurs éléments en forme de plaques, superposées, ces éléments étant traversés chacun par une série de canaux (3A, 3B), allongés, voisins,

   avec au moins deux types d'éléments A et B empilés en alternance et dont les séries de canaux (3A, 3B) sont superposées au niveau de leur sortie débouchant dans la chambre de mélange (9C) pour y former une section commune,
   et en alternance, les séries de canaux (3A, 3B) du type d'élément A étant reliées à une chambre d'alimentation fournissant un fluide A' et les séries de canaux de type B étant reliées à une chambre d'alimentation fournissant un fluide B',
   caractérisé en ce que

   a) les éléments A et B en forme de plaques de la pièce de guidage sont composés chacun de feuilles minces (1A, 1B) d'une épaisseur comprise entre 30 et 1000 µm de préférence < 250 µm, avec une extension latérale de l'ordre du millimètre, avec chaque fois un faisceau de rainures (2A, 2B) usiné dans ces feuilles pour qu'en superposant les feuilles (1A, 1B) on forme chaque fois une série de canaux (3A, 3B) pour guider les fluides A', B' à mélanger ;
   b) les rainures (2A, 2B) ont une profondeur < 1000 µm, de préférence < 250 µm, des largeurs de 10 µm jusque dans le domaine du millimètre, de préférence toutefois < 500 µm pour des épaisseurs de parois des cloisons (4A, 4B) des fonds de rainures (5A, 5B) < 1000 µm et de préférence < 250 µm,
   c) les faisceaux respectifs de rainures (2A, 2B) des feuilles empilées (1A, 1B) étant chaque fois cintrés en arc de cercle et alternant de la chambre de mélange (9C) vers chaque fois une chambre d'alimentation (7A, 7B) de fluide A', B' de façon que tous les faisceaux de rainures (2A, 2B) des feuilles (1A, 1B) soient alignés parallèlement et débouchent dans la chambre de mélange (9C).

2. Micromélangeur statique selon la revendication 1, caractérisé en ce que

   a) les feuilles (1A, 1B) empilées ont en vue de dessus la forme géométrique d'un pentagone composé d'un rectangle auquel est relié un triangle isocèle dont la base est un côté du rectangle,
   b) les deux surfaces (6A, 6B) formées par les branches du triangle sont reliées aux chambres d'alimentation (7A, 7B) des fluides A', B' et la surface (8), formée par le grand côté opposé du rectangle, est reliée à la chambre de mélange (9C),
   c) les branches (6A, 6B) du triangle sont inclinées par rapport à la base pour que les rainures (2A, 2B) en arc de cercle qui, partant de la chambre de mélange (9C), vont alternativement d'une feuille (1A) à l'autre feuille (1B) à la chambre d'alimentation (7A) ou à la chambre d'alimentation (7B) possèdent chaque fois sensiblement la même longueur.

3. Micromélangeur statique selon la revendication 1, caractérisé en ce que
   les feuilles (1A, 1B) empilées sont reliées pour former un corps de microstructure (6) étanche au vide et résistant à la pression, par exemple par une soudure par diffusion, ce corps étant raccordé à la chambre d'alimentation (7A, 7B) et à la chambre de, mélange (9C).

4. Procédé de fabrication de feuilles selon la revendication 2,
   caractérisé par les étapes suivantes :

   a) on tend une feuille brute (13) par dépression sur une plaque métallique frittée (12), meulée, entraînée en rotation,
   b) dans la feuille brute (13), entraînée en rotation à l'aide d'un diamant de moulage, on réalise dans la zone centrale de la feuille brute (13), entre son point de rotation (M) et sa périphérie, un faisceau de rainures concentriques (14),
   c) on subdivise la feuille brute (13) en quatre feuilles élémentaires (1A, 1B) pour que deux coupes perpendiculaires, qui se croisent au centre de rotation (M), donnent quatre segments et que d'autres coupes sur chaque segment forment quatre pentagones de même contour selon la revendication 2.

Fig. 1

## Fig. 2

## Fig. 3